# EUROPEAN PATENT APPLICATION

(11) **EP 4 542 706 A1**
(43) Date of publication of application: **23.04.2025**
(21) Application number: 23826980.7
(22) Date of filing: 07.06.2023
(51) Int. Cl.: H01M 10/054, C04B 35/113, C04B 35/447, H01M 4/58, H01M 4/587, H01M 10/052, H01M 10/0525, H01M 10/0562, H01M 10/058, H01M 10/0585, H01M 10/39, H01M 50/103, H01M 50/184, H01M 50/186, H01M 50/191, H01M 50/198

(54) **ALL-SOLID-STATE SECONDARY BATTERY**

(30) Priority: 20.06.2022 JP 2022098656; 02.11.2022 JP 2022176143
(71) Applicant: Nippon Electric Glass Co., Ltd., Otsu-shi, Shiga 520-8639 (JP)
(72) Inventor: MASUDA Noriaki, Otsu-shi Shiga 520-8639 (JP); KANO Gentaro, Otsu-shi Shiga 520-8639 (JP)
(74) Representative: Tetzner, Michael
(86) International application number: PCT/JP2023/021124
(87) International publication number: WO 2023/248793

(57) **Abstract**

Provided is an all-solid-state secondary battery capable of developing good cycle characteristics even when used for a certain period at high temperatures of 150°C and above. An all-solid-state secondary battery 1 with a solid electrolyte layer **2,** a positive electrode layer **3,** and a negative electrode layer 4 includes: a first current collector layer 5 provided on a principal surface of the positive electrode layer 2 located on a side thereof opposite to a side thereof where the solid electrolyte layer 2 is disposed; a second current collector layer 6 provided on a principal surface of the negative electrode layer 4 located on a side thereof opposite to a side thereof where the solid electrolyte layer 2 is disposed; and a sealing layer 7 provided between an outer peripheral edge 5a of the first current collector layer 5 and an outer peripheral edge 6a of the second current collector layer 6 to seal the positive electrode layer 3 and the negative electrode layer **4,** wherein an internal space 8 enclosed by the first current collector layer **5,** the second current collector layer **6,** and the sealing layer 7 is vacuum.

## Description

### [Technical Field]

The present invention relates to all-solid-state secondary batteries.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of fire or explosion. As a solution to this problem, all-solid-state batteries, such as all-solid-state lithium-ion batteries, in which a solid electrolyte is used instead of an organic electrolytic solution have been under development.

In all-solid-state batteries, an organic material, such as resin, is used at the junction between the electrode terminal and the current collector and for the outer package of the battery. Furthermore, a gas, such as air, is contained in the interior of the laminate outer package into which elements of the all-solid-state battery are encapsulated (see, for example, Patent Literature 1).

### [Citation List]

### [Patent Literature]

[PTL 1]
JP-A-2015-79719

### [Summary of Invention]

### [Technical Problem]

When an all-solid-state battery is used in a high-temperature environment, for example, at 150°C or higher, an organic material, such as resin, used at the junction between the electrode terminal and the current collector and for the outer package of the battery may be deteriorated or the gas remaining in the interior of the laminate outer package into which elements of the all-solid-state battery are encapsulated may expand, which may cause the junctions between components of the all-solid-state battery (for example, the junction between the electrode terminal and the current collector) to peel off, thus increase the internal resistance of the all-solid-state battery, and significantly decrease the discharge capacity which can be charged and discharged.

An object of the present invention is to provide an all-solid-state secondary battery capable of developing good output characteristics and cycle characteristics even when used for a certain period at high temperatures of 150°C and above.

### [Solution to Problem]

An all-solid-state secondary battery according to the present invention is an all-solid-state secondary battery with a solid electrolyte layer, a positive electrode layer, and a negative electrode layer and includes: a first current collector layer provided on a principal surface of the positive electrode layer located on a side thereof opposite to a side thereof where the solid electrolyte layer is disposed; a second current collector layer provided on a principal surface of the negative electrode layer located on a side thereof opposite to a side thereof where the solid electrolyte layer is disposed; and a sealing layer provided between an outer peripheral edge of the first current collector layer and an outer peripheral edge of the second current collector layer to seal the positive electrode layer and the negative electrode layer, wherein an internal space enclosed by the first current collector layer, the second current collector layer, and the sealing layer is vacuum.

In the present invention, the sealing layer preferably contains a low-melting-point glass having a softening point of 500°C or lower.

In the present invention, the sealing layer preferably contains a Bi₂O₃-B₂O₃-based glass.

In the present invention, the positive electrode layer preferably contains a positive-electrode active material made of a crystallized glass containing crystals represented by a general formula NaₓMP₂O₇ (where 1 ≤ x ≤ 2 and M is at least one selected from the group consisting of Fe, Ni, Co, Mn, and Cr).

In the present invention, the negative electrode layer preferably contains a negative-electrode active material made of hard carbon.

In the present invention, the solid electrolyte layer preferably contains a solid electrolyte being at least one selected from the group consisting of β-alumina, β"-alumina, and NASICON crystals.

### [Advantageous Effects of Invention]

The present invention enables provision of an all-solid-state secondary battery capable of developing good output characteristics and cycle characteristics even when used for a certain period at high temperatures of 150°C and above.

### [Brief Description of Drawings]

[Fig. 1]

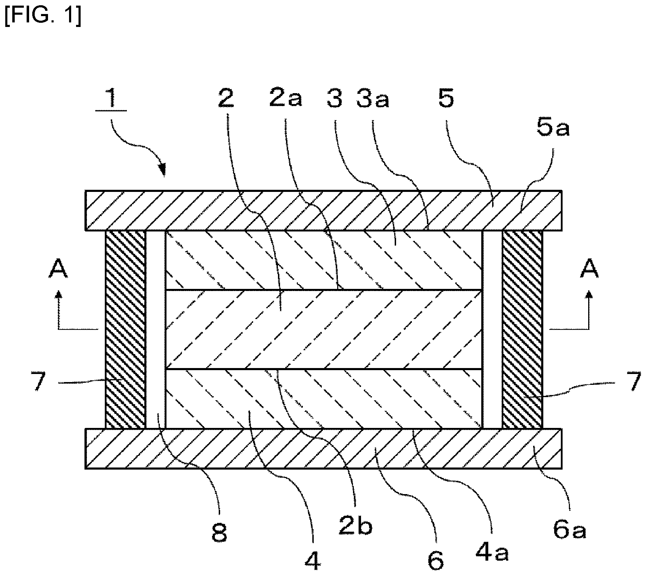

   Fig. 1 is a schematic cross-sectional front view showing an all-solid-state secondary battery according to an embodiment of the present invention.
[Fig. 2]

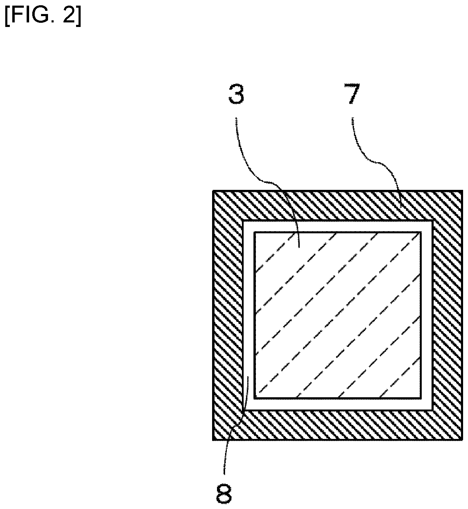

   Fig. 2 is a schematic cross-sectional plan view taken along the line A-A in Fig. 1.
[Fig. 3]

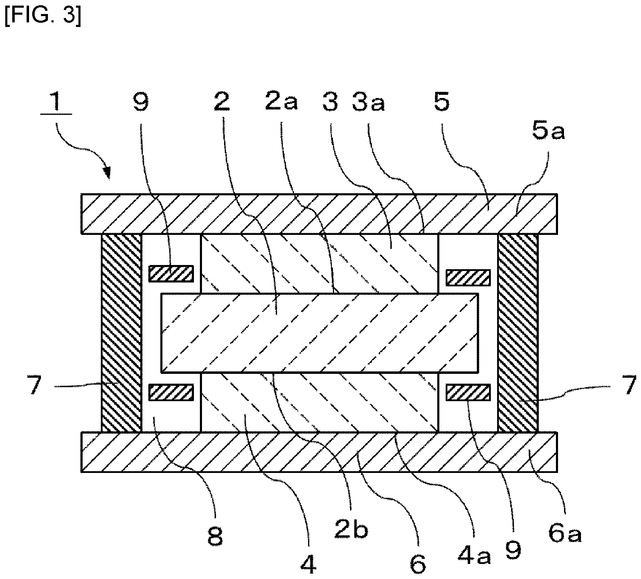

   Fig. 3 is a schematic cross-sectional front view showing an all-solid-state secondary battery according to an embodiment of the present invention.
[Fig. 4]

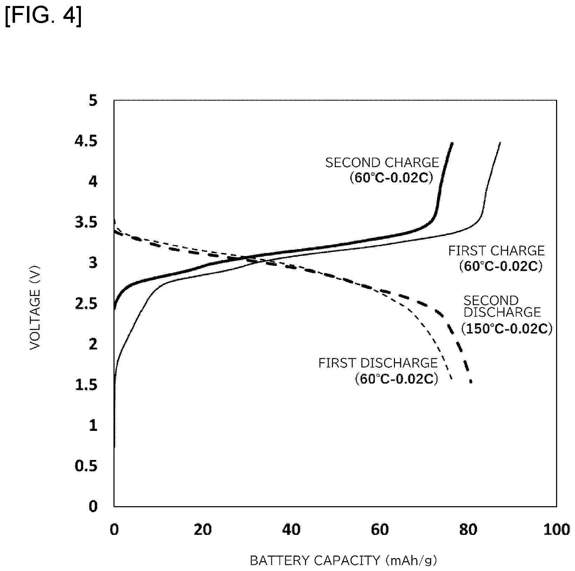

   Fig. 4 is a graph showing results of the charge/discharge tests in Example **1.**

### [Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

### (All-Solid-State Secondary Battery)

Fig. 1 is a schematic cross-sectional view showing an all-solid-state secondary battery according to an embodiment of the present invention. Fig. 2 is a schematic cross-sectional plan view taken along the line A-A in Fig. 1. As shown in Figs. 1 and 2, an all-solid-state secondary battery 1 includes a solid electrolyte layer 2, a positive electrode layer 3, a negative electrode layer 4, a first current collector layer 5, a second current collector layer 6, and a sealing layer 7. Examples of the type of the all-solid-state secondary battery 1 include an all-solid-state lithium-ion secondary battery, an all-solid-state sodium-ion secondary battery, and an all-solid-state magnesium-ion secondary battery. Hereinafter, a description will be given by taking as an example an all-solid-state sodium-ion secondary battery, but the following embodiments are applicable to all general types of all-solid-state secondary batteries.

In this embodiment, the solid electrolyte layer 2 is made of a sodium-ion conductive oxide. Furthermore, the solid electrolyte layer 2 has a first principal surface 2a and a second principal surface 2b opposed to each other.

The positive electrode layer 3 is provided on the first principal surface 2a of the solid electrolyte layer **2.** The positive electrode layer 3 contains a positive-electrode active material capable of absorbing and releasing sodium. The first current collector layer 5 is provided on a principal surface 3a of the positive electrode layer 3 located on the side opposite to the side thereof where the solid electrolyte layer 2 is provided. For the purpose of increasing the electronic conductivity at the interface between the positive electrode layer 3 and the first current collector layer **5,** a thin film made of metallic aluminum or the like is preferably previously formed on the surface of the positive electrode layer 3 by the sputtering method, the vacuum evaporation method or others. Furthermore, the thin film is preferably a sputtered film formed by the sputtering method because the sputtered film has excellent adhesion to the positive electrode layer **3.**

The negative electrode layer 4 is provided on the second principal surface 2b of the solid electrolyte layer **2.** The negative electrode layer 4 contains a negative-electrode active material capable of absorbing and releasing sodium. The second current collector layer 6 is provided on a principal surface 4a of the negative electrode layer 4 located on the side opposite to the side thereof where the solid electrolyte layer 2 is provided. For the purpose of increasing the electronic conductivity at the interface between the negative electrode layer 4 and the second current collector layer **6,** a thin film made of metallic aluminum or the like is preferably previously formed on the surface of the negative electrode layer 4 by the sputtering method, the vacuum evaporation method or others. Furthermore, the thin film is preferably a sputtered film formed by the sputtering method because the sputtered film has excellent adhesion to the negative electrode layer **4.**

The sealing layer 7 is provided between an outer peripheral edge 5a of the first current collector layer 5 and an outer peripheral edge 6a of the second current collector layer **6.** The solid electrolyte layer **2,** the positive electrode layer **3,** and the negative electrode layer 4 are disposed in an internal space 8 enclosed by the first current collector layer **5,** the second current collector layer **6,** and the sealing layer **7.** Furthermore, the internal space 8 enclosed by the first current collector layer **5,** the second current collector layer **6,** and the sealing layer 7 is vacuum. Therefore, an all-solid-state secondary battery 1 can be provided that, even when used for a certain period at high temperatures of 150°C and above, does not expand the internal space 8 of the battery and can develop good output characteristics and cycle characteristics. The term vacuum used herein refers to a pressure condition of 1000 Pa or less. The higher the degree of vacuum in the internal space 8 of the battery is, the better battery characteristics the battery has. The degree of vacuum in the internal space 8 of the battery is preferably 500 Pa or less and more preferably 100 Pa or less. Since the internal space 8 of the battery is placed under vacuum, both the current collector layers are always held pressurized at atmospheric pressure from the outside and, thus, the state of contact between the positive electrode layer 3 and the first current collector layer 5 and the state of contact between the negative electrode layer 4 and the second current collector layer 6 are held stable for a long period of time. Although in the embodiment shown in Fig. 1 the sealing layer 7 is disposed between the undersurface of the outer peripheral edge 5a of the first current collector layer 5 and the top surface of the outer peripheral edge 6a of the second current collector layer **6,** the sealing layer 7 may be disposed to abut the side surface of the outer peripheral edge 5a of the first current collector layer 5 and the side surface of the outer peripheral edge 6a of the second current collector layer **6,** may be disposed to abut the side surface of the outer peripheral edge 5a of the first current collector layer 5 and the top surface of the outer peripheral edge 6a of the second current collector layer 6 or may be disposed to abut the undersurface of the outer peripheral edge 5a of the first current collector layer 5 and the side surface of the outer peripheral edge 6a of the second current collector layer 6.

Aside from the above structures, as shown in Fig. 3, for the purpose of inhibiting short-circuits due to contact between an end portion of the solid electrolyte layer 2 on which the positive electrode layer 3 and the negative electrode layer 4 are formed and the first current collector layer 5 or the second current collector layer 6, insulating members 9 may be placed in the internal space 8 of the battery. The insulating members 9 are preferably in the form of a thin piece. The thickness of the insulating members 9 is preferably not more than 50 µm, more preferably not more than 30 µm, preferably not less than 0.5 µm, and more preferably not less than 1 µm. The insulating members 9 preferably have thermal resistance to temperatures greater than 150°C. The insulating members 9 are preferably made of an inorganic substance, such as ceramics or glass, but resin may be used for insulating members 9 so long as it has thermal resistance to temperatures greater than 150°C. Examples of a material that can be used as the insulating member 9 made of an inorganic substance, such as ceramics or glass, include a ceramic sheet, a glass sheet, a ceramic-fiber non-woven fabric, a glass-fiber non-woven fabric, ceramic wool, and glass wool, which are formed from alumina, zirconia, aluminum nitride, silicon nitride, glass powder or glass fibers, and examples of the insulating member 9 made of resin include a ceramic sheet, a glass sheet, a ceramic-fiber non-woven fabric, a glass-fiber non-woven fabric, ceramic wool, and glass wool, which are formed from alumina, zirconia, aluminum nitride, silicon nitride, glass powder or glass fibers, and include polyphenylene sulfide, polyimide resin, polytetrafluoroethylene, polyamide imide, silicon resin, and allyl resin. Although in Fig. 3 the insulating members 9 are provided in both the internal space 8 between the solid electrolyte layer 2 and the first current collector layer 5 and the internal space 8 between the solid electrolyte layer 2 and the second current collector layer 6, the insulating members 9 may be provided in only one of both the internal spaces 8.

In this embodiment, all of the solid electrolyte layer 2, the positive electrode layer 3, the negative electrode layer 4, the first current collector layer 5, the second current collector layer 6, and the sealing layer 7 constituting the all-solid-state secondary battery 1 are preferably made of an inorganic substance and all the members constituting the all-solid-state secondary battery 1 are more preferably made of an inorganic substance. The term "made of an inorganic substance" means that the relevant layer or member contains no organic substance (for example, the content thereof is 0.1 wt% or less), such as resin, except for impurities and is made of an inorganic substance, such as metal, ceramics or glass.

In this embodiment, the capacity ratio of the negative electrode layer 4 to the positive electrode layer 3 (negative electrode layer/positive electrode layer) is preferably not more than **1.10,** more preferably not more than **0.80,** and even more preferably not more than **0.60.** When the capacity ratio of the negative electrode layer 4 to the positive electrode layer 3 (negative electrode layer/positive electrode layer) is the above upper limit or less, the charge-discharge efficiency of the all-solid-state secondary battery 1 can be further increased and the energy density can be further increased. Furthermore, the capacity ratio of the negative electrode layer 4 to the positive electrode layer 3 (negative electrode layer/positive electrode layer) is preferably not less than 0.10, more preferably not less than 0.30, and even more preferably not less than 0.40. When the capacity ratio of the negative electrode layer 4 to the positive electrode layer 3 (negative electrode layer/positive electrode layer) is the above lower limit or more, excessive precipitation of metallic sodium in the negative electrode layer 4 can be reduced and, thus, a short-circuit can be made even less likely to occur.

The capacity ratio of the negative electrode layer 4 to the positive electrode layer 3 (negative electrode layer/positive electrode layer) can be adjusted, for example, by the types of materials constituting the positive electrode layer 3 and the negative electrode layer 4, the proportion of the positive-electrode active material or the negative-electrode active material, or the thickness of the negative electrode layer 4 relative to the positive electrode layer 3.

For example, when, in the above embodiment, the positive electrode layer 3 contains a positive-electrode active material made of a crystallized glass containing crystals represented by a general formula NaₓMP₂O₇ (where 1 ≤ x ≤ 2 and M is at least one selected from the group consisting of Fe, Ni, Co, Mn, and Cr) and the negative electrode layer 4 contains a negative-electrode active material made of hard carbon, the thickness ratio of the negative electrode layer 4 to the positive electrode layer 3 (negative electrode layer/positive electrode layer) is preferably not more than 0.50, more preferably not more than 0.35, and even more preferably not more than 0.25. When the thickness ratio of the negative electrode layer 4 to the positive electrode layer 3 (negative electrode layer/positive electrode layer) is the above upper limit or less, the charge-discharge efficiency of the all-solid-state sodium-ion secondary battery can be further increased and the energy density can be further increased.

Furthermore, the thickness ratio of the negative electrode layer 4 to the positive electrode layer 3 (negative electrode layer/positive electrode layer) is preferably not less than 0.025, more preferably not less than 0.050, and even more preferably not less than 0.150. When the thickness ratio of the negative electrode layer 4 to the positive electrode layer 3 (negative electrode layer/positive electrode layer) is the above lower limit or more, precipitation of metallic sodium in the negative electrode layer 4 can be further reduced and, thus, a short-circuit can be made even yet less likely to occur. In addition, the cycle characteristics can be further increased.

The thickness of the positive electrode layer 3 is preferably not less than 50 µm, more preferably not less than 200 µm, preferably not more than 1000 µm, and more preferably not more than 600 µm. The thickness of the negative electrode layer 4 is preferably not less than 10 µm, more preferably not less than 40 µm, preferably not more than 200 µm, more preferably not more than 150 µm, and even more preferably not more than 100 µm.

In the present invention, as described previously, metallic sodium preferably precipitates inside the negative electrode layer 4 upon completion of charging of the battery. In this case, the safety of the all-solid-state sodium-ion secondary battery can be further increased.

In the present invention, the capacity of each of the positive electrode layer 3 and the negative electrode layer 4 can be calculated by multiplying the weight of an active material supported on the positive electrode layer 3 or the negative electrode layer 4 by the theoretical capacity of the active material. Alternatively, the capacity of each of the positive electrode layer 3 and the negative electrode layer 4 can be measured by producing respective half cells (with metallic Na used as a counterelectrode) of the positive electrode layer 3 and the negative electrode layer 4 and electrically charging and discharging each of the half cells. In measuring the capacity of each of the positive electrode layer 3 and the negative electrode layer 4 in an all-solid-state sodium-ion secondary battery (a finished product), the capacity can be measured by taking apart the all-solid-state sodium-ion secondary battery to separate the positive electrode layer 3 from the negative electrode layer **4,** producing respective half cells of these electrode layers, and then electrically charging and discharging each of the half cells.

Hereinafter, a detailed description will be given of each of the layers constituting the all-solid-state secondary battery 1 according to the present invention.

### (Solid Electrolyte Layer 2)

The solid electrolyte constituting the solid electrolyte layer 2 is preferably made of an ionically conductive material, such as a sodium-ion conductive oxide. Examples of the sodium-ion conductive oxide include compounds containing: at least one selected from among Al, Y, Zr, Si, and P; Na; and O. A specific example is beta-alumina or NASICON crystals both of which have an excellent sodium-ion conductivity. The preferred sodium-ion conductive oxide is β-alumina or β"-alumina. These materials have more excellent sodium-ion conductivity.

Beta-alumina includes two types of crystals: β-alumina (theoretical composition formula: Na₂O·11Al₂O₃) and β"-alumina (theoretical composition formula: Na₂O·5.3Al₂O₃). β"-alumina is a metastable material and is therefore generally used in a state in which Li₂O or MgO is added as a stabilizing agent thereto. β"-alumina has a higher sodium-ion conductivity than β-alumina. Therefore, β"-alumina alone or a mixture of β"-alumina and β-alumina is preferably used and Li₂O-stabilized β"-alumina (Na_{1.7}Li_{0.3}Al_{10.7}O₁₇) or MgO-stabilized β"-alumina ((Al_{10.32}Mg_{0.68}O₁₆) (Na_{1.68}O)) is more preferably used.

Examples of NASICON crystals include Na₃Zr₂Si₂PO₁₂, Na_{3.2}Zr_{1.3}Si_{2.2}P_{0.7}O_{10.5}, Na₃Zr_{1.6}Ti_{0.4}Si₂PO₁₂, Na₃Hf₂Si₂PO₁₂, Na_{3.4}Zr_{0.9}Hf_{1.4}Al_{0.6}Si_{1.2}P_{1.8}O₁₂, Na₃Zr_{1.7}Nb_{0.24}Si₂PO₁₂, Na_{3.6}Ti_{0.2}Y_{0.7}Si_{2.8}O₉, Na₃Zr_{1.88}Y_{0.12}Si₂PO₁₂, Na_{3.12}Zr_{1.88}Y_{0.12}Si₂PO₁₂, and Na_{3.6}Zr_{0.13}Yb_{1.67}Si_{0.11}P_{2.9}O₁₂. As the NASICON crystals, Na_{3.12}Zr_{1.88}Y_{0.12}Si₂PO₁₂ is particularly preferred because it has an excellent sodium-ion conductivity.

The solid electrolyte layer 2 can be produced by mixing raw material powders, forming the mixed raw material powder into a shape, and then firing it. For example, the solid electrolyte layer 2 can be produced by making the raw material powders into a slurry, forming the slurry into a green sheet, and then firing the green sheet. Alternatively, the solid electrolyte layer 2 may be produced by the sol-gel method.

The thickness of the solid electrolyte layer 2 is preferably within a range of 5 µm to 1000 µm, more preferably within a range of 10 µm to 200 µm, and particularly preferably within a range of 20 µm to 100 µm. If the thickness of the solid electrolyte layer 2 is too small, its mechanical strength decreases to make it easily broken and, therefore, the battery is likely to cause an internal short-circuit. If the thickness of the solid electrolyte layer 2 is too large, the distance of sodium ion conduction of the battery accompanying charge and discharge becomes long, the internal resistance thereof therefore becomes high, and, thus, the discharge capacity and the operating voltage are likely to decrease. In addition, the energy density per unit volume of the all-solid-state sodium-ion secondary battery is likely to decrease.

### (Positive Electrode Layer 3)

The type of the positive-electrode active material contained in the positive electrode layer 3 is not particularly limited, but is preferably a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr). Particularly, the positive-electrode active material is more preferably one made of a crystallized glass containing crystals represented by a general formula NaₓMP₂O₇ (where 1 ≤ x ≤ 2 and M is at least one selected from the group consisting of Fe, Ni, Co, Mn, and Cr). Examples that can be used as positive-electrode active material crystals as just described include Na₂FeP₂O₇, Na₂CoP₂O₇, and Na₂NiP₂O₇.

In the present disclosure, a crystallized glass means a glass obtained by heating (firing) a precursor glass containing an amorphous phase to precipitate crystals (crystallize the precursor glass). The entire amorphous phase may transition into a crystal phase or the amorphous phase may partially remain. Furthermore, a single kind of crystals may be precipitated or two or more kinds of crystals may be precipitated. For example, whether the glass is a crystallized glass or not can be determined by the peak angles shown by powder X-ray diffraction (XRD).

The positive electrode layer 3 may contain a sodium-ion conductive solid electrolyte and/or a conductive agent. The ratio among the component materials in the positive electrode layer 3 may be, for example, in terms of % by mass, 60% to 99. 9% for the positive-electrode active material, 0% to 30% for the sodium-ion conductive solid electrolyte, and 0.1% to 10% for the conductive agent.

Examples of the sodium-ion conductive solid electrolyte that can be used include those described in the section for the solid electrolyte layer 2. The sodium-ion conductive solid electrolyte is preferably used in powdered form. The average particle diameter of powder of the sodium-ion conductive solid electrolyte is preferably not less than 0.05 µm and not more than 3 µm, more preferably not less than 0.05 µm and less than 1.8 µm, even more preferably not less than 0.05 µm and not more than 1.5 µm, particularly preferably not less than 0.1 µm and not more than 1.2 µm, and most preferably not less than 0.1 µm and not more than 0.7 µm.

An example of the conductive agent that can be used is a conductive carbon. Examples of the conductive carbon include acetylene black, carbon black, Ketjen black, vapor-grown carbon fiber carbon conductive agent (VGCF), and carbon nanotubes. The conductive agent is preferably a carbon-based conductive agent made of any of materials as just described.

The positive electrode layer 3 can be formed, for example, by forming an electrode material layer containing a positive-electrode active material precursor and, as necessary, a sodium-ion conductive solid electrolyte powder and a conductive agent on the first principal surface 2a of the solid electrolyte layer 2 and firing the electrode material layer. The electrode material layer can be obtained, for example, by applying a paste containing the positive-electrode active material precursor and, as necessary, the solid electrolyte powder and the conductive agent and drying the paste. As necessary, the paste may contain a binder, a plasticizer, a solvent or so on. Alternatively, the electrode material layer may be formed of a powder compact.

The temperature for drying the paste is not particularly limited, but, for example, may be not lower than 30°C and not higher than 150°C. The time for drying the paste is not particularly limited, but, for example, may be not less than 5 minutes and not more than 600 minutes.

The atmosphere during the firing is preferably a reductive atmosphere. The firing temperature (the maximum temperature) may be, for example, 400°C to 600°C and the holding time at the temperature may be, for example, five minutes to less than three hours.

### Positive-Electrode Active Material Precursor;

The positive-electrode active material precursor (positive-electrode active material precursor powder) is preferably made of an amorphous oxide material that generates active material crystals when subjected to firing. In the case where the positive-electrode active material precursor powder is made of an amorphous oxide material, when subjected to firing, the amorphous oxide material not only generates active material crystals, but also can be softened and fluidized to form a dense positive electrode layer 3. In addition, when the positive electrode layer 3 contains a solid electrolyte, the positive-electrode active material and the solid electrolyte can be integrated together. Alternatively, in the case where the positive electrode layer 3 abuts the solid electrolyte layer 2, both the layers can be bonded together. As a result, an ion-conducting path can be formed better, which is favorable. In the present invention, the term "amorphous oxide material" is not limited to a fully amorphous oxide material and includes those partially containing crystals (for example, those having a crystallinity of 10% or less).

The positive-electrode active material precursor powder preferably contains, in terms of % by mole of the following oxides, 25% to 55% Na₂O, 10% to 30% Fe₂O₃+Cr₂O₃+MnO+CoO+NiO, and 25% to 55% P₂O₅. The reasons why the composition is limited as just described will be described below. In the following description of the respective contents of the components, "%" refers to "% by mole" unless otherwise stated.

Na₂O is a main component of the active material crystals represented by the general formula NaₓM_{y}P₂O_{z} (where M represents at least one transition metal element selected from among Cr, Fe, Mn, Co and Ni, 1 ≤ x ≤ 2.8, 0.95 ≤ y ≤ 1.6, and 6.5 ≤ z ≤ 8). The content of Na₂O is preferably 25% to 55% and more preferably 30% to 50%. When the content of Na₂O is within the above range, the charge and discharge capacities can be further increased.

Fe₂O₃, Cr₂O₃, MnO, CoO, and NiO are also main components of the active material crystals represented by the general formula NaₓM_{y}P₂O_{z}. The content of Fe₂O₃+Cr₂O₃+MnO+CoO+NiO is preferably 10% to 30% and more preferably 15% to 25%. When the content of Fe₂O₃+Cr₂O₃+MnO+CoO+NiO is the above lower limit or more, the charge and discharge capacities can be further increased. On the other hand, when the content of Fe₂O₃+Cr₂O₃+MnO+CoO+NiO is the above upper limit or less, this can make it less likely that undesirable crystals, such as Fe₂O₃, Cr₂O₃, MnO, CoO or NiO, precipitate. In order to further increase the cycle characteristics, Fe₂O₃ is preferably positively contained in the positive-electrode active material precursor powder. The content of Fe₂O₃ is preferably 1% to 30%, more preferably 5% to 30%, even more preferably 10% to 30%, and particularly preferably 15% to 25%. The content of each component of Cr₂O₃, MnO, CoO, and NiO is preferably 0% to 30%, more preferably 10% to 30%, and even more preferably 15% to 25%. In containing at least two components selected from among Fe₂O₃, Cr₂O₃, MnO, CoO, and NiO in the positive-electrode active material precursor powder, the total content of them is preferably 10% to 30% and more preferably 15% to 25%.

P₂O₅ is also a main component of the active material crystals represented by the general formula NaₓM_{y}P₂O_{z}. The content of P₂O₅ is preferably 25% to 55% and more preferably 30% to 50%. When the content of P₂O₅ is within the above range, the charge and discharge capacities can be further increased.

The positive-electrode active material precursor powder may contain, in addition to the above components, V₂O₅, Nb₂O₅, MgO, Al₂O₃, TiO₂, ZrO₂ or Sc₂O₃. These components have the effect of increasing the conductivity (electronic conductivity), which facilitates the enhancement of the rapid charge and discharge characteristics. The total content of these components is preferably 0% to 25% and more preferably 0.2% to 10%. When the content of these components is the above upper limit or less, heterogeneous crystals not contributing to the battery characteristics are less likely to be generated and, therefore, the charge and discharge capacities can be further increased.

Aside from the above components, the positive-electrode active material precursor powder may contain SiO₂, B₂O₃, GeO₂, Ga₂O₃, Sb₂O₃ or Bi₂O₃. When containing any of these components, a positive-electrode active material precursor powder having a further increased glass formation ability and being more homogeneous can be easily obtained. The total content of these components is preferably 0% to 25% and more preferably 0.2% to 10%. Because these components do not contribute to the battery characteristics, an excessively large content of them leads to a tendency to decrease the charge and discharge capacities.

The positive-electrode active material precursor powder is preferably made by melting a raw material batch and forming the melt into a shape. This method is preferred because an amorphous positive-electrode active material precursor powder having excellent homogeneity can be easily obtained. Specifically, the positive-electrode active material precursor powder can be produced in the following manner.

First, raw materials are formulated to give a desired composition, thus obtaining a raw material batch. Next, the obtained raw material batch is melted. It is sufficient for the melting temperature to be appropriately adjusted so that the raw material batch can be homogeneously melted. For example, the melting temperature is preferably 800°C or higher and more preferably 900°C or higher. The upper limit of the melting temperature is not particularly limited, but an excessively high melting temperature leads to energy loss or evaporation of the sodium component and so on. Therefore, the melting temperature is preferably not higher than 1500°C and more preferably not higher than 1400°C.

Next, the obtained melt is formed into a shape. The method for forming the melt into a shape is not particularly limited. For example, the melt may be formed into a film with rapid cooling by pouring the melt between a pair of cooling rolls or formed into an ingot by casting the melt into a mold.

Subsequently, the obtained formed body is ground to obtain a positive-electrode active material precursor powder. The average particle diameter of the positive-electrode active material precursor powder is preferably not less than 0.01 µm and less than 0.7 µm, more preferably not less than 0.03 µm and not more than 0.6 µm, even more preferably not less than 0.05 µm and not more than 0.6 µm, and particularly preferably not less than 0.1 µm and not more than 0.5 µm.

### Binder;

The binder is a material for binding the component materials (component material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; and polyvinylidene fluoride.

### (Negative Electrode Layer 4)

The type of the negative-electrode active material contained in the negative electrode layer 4 is not particularly limited, but, for example, a carbon electrode material, such as hard carbon or soft carbon, can be used. The carbon electrode material is preferably hard carbon. However, the negative-electrode active material may contain a negative-electrode active material consisting mainly of an alloy of tin, bismuth, lead, phosphorus or others capable of absorbing sodium, or metallic sodium. The negative electrode layer 4 is preferably not a negative electrode layer composed of a single phase of metallic sodium.

The negative electrode layer 4 may further contain a sodium-ion conductive solid electrolyte and/or a conductive agent. The ratio among the component materials in the negative electrode layer 4 may be, for example, in terms of % by mass, 60% to 95% for the negative-electrode active material, 5% to 35% for the sodium-ion conductive solid electrolyte, and 0% to 5% for the conductive agent. Examples of the sodium-ion conductive solid electrolyte that can be used include those described in the section for the solid electrolyte layer. Examples of the conductive agent that can be used include those described in the section for the positive electrode layer **3.**

Hereinafter, a description will be given of, as an example, a method for forming a negative electrode layer 4 containing a carbon electrode material as a negative-electrode active material and a sodium-ion conductive solid electrolyte.

### Method for Forming Negative Electrode Layer 4;

First, a paste containing a carbon electrode material precursor and a sodium-ion conductive solid electrolyte is made. In making the paste, first, a sodium-ion conductive solid electrolyte precursor is prepared. In this stage, it is preferred to prepare a solution of sodium-ion conductive solid electrolyte precursor. Specific examples of the sodium-ion conductive solid electrolyte precursor and its solution will be described later. Furthermore, a carbon electrode material precursor (a precursor of carbon electrode material made of hard carbon) is prepared. Examples of the carbon electrode material precursor that can be used include appropriate sugars, biomass, and polymers.

Next, the solution of sodium-ion conductive solid electrolyte precursor and the carbon electrode material precursor are mixed and then dried. Thus, a powder mixture of the sodium-ion conductive solid electrolyte precursor and the carbon electrode material precursor is obtained. Next, the powder mixture is ground and then mixed with a conductive agent and a binder in an organic solvent. An example of the organic solvent that can be used is N-methyl-2-pyrrolidone. Thus, a paste is obtained.

Next, the paste is applied to the second principal surface 2b of the solid electrolyte layer 2. In this manner, a lamination step of layering the solid electrolyte layer 2 and the paste serving as the electrode material layer to form a laminate is performed. Next, the laminate of the solid electrolyte layer 2 and the paste is fired, for example, in an N₂ atmosphere at higher than 600°C and not higher than 1300°C. The firing is sufficient to be performed in an inert atmosphere. For example, the firing may be performed in an atmosphere of Ar, Ne or He or in a vacuum. Alternatively, the firing may be performed in a reductive atmosphere containing H₂. When the firing is performed in an inert atmosphere or a reductive atmosphere, the initial charge-discharge efficiency of the negative-electrode active material can be further increased, which is favorable. Unless the carbon electrode is oxidized or oxidatively decomposed during the firing, the atmosphere may contain a small amount of oxygen. The oxygen concentration may be, for example, 1000 ppm or less, but is not limited to this. In the manner as thus far described, a negative electrode layer 4 can be produced.

### Carbon Electrode Material Precursor;

In using a sugar as the carbon electrode material precursor, examples include sucrose, cellulose, D-glucose, and sucrose. In using biomass as the carbon electrode material precursor, examples include cornstalks, sorghum stalks, pine cones, mangosteen, argan nut shells, chaff, dandelion, straw cores, ramie fibers, cotton, kelp, and coconut endocarp. In using a polymer as the carbon electrode material precursor, examples include PAN (polyacrylonitrile) , pitch, PVC (polyvinyl chloride) nanofibers, polyaniline, sodium polyacrylate, tire (polymer for tire), and phosphorus-doped PAN.

### Sodium-Ion Conductive Solid Electrolyte Precursor and Solution Thereof;

When the sodium conductive solid electrolyte is beta-alumina, a sodium conductive solid electrolyte precursor can be obtained, for example, by mixing aluminum nitrate, sodium nitrate, and lithium nitrate. In doing so, the ratio among the above materials is adjusted to give a desired composition ratio of the sodium-ion conductive solid electrolyte.

When the sodium-ion conductive solid electrolyte is NASICON crystals or Na₅XSi₄O₁₂ crystals (where X represents at least one selected from among group III transition metal elements and preferably rare earth elements), an example of the solution of sodium conductive solid electrolyte precursor is a solution containing a sodium element and a transition metal element both constituting a sodium conductive solid electrolyte and carbonate ions. In the solution, the sodium element is contained in the form of sodium ions and the transition metal element is contained in the form of transition metal ions. The sodium-ion conductive solid electrolyte precursor is made of, for example, a gelled product or a dried product from the solution of sodium-ion conductive solid electrolyte precursor. Furthermore, the sodium-ion conductive solid electrolyte is made of a fired product from the sodium-ion conductive solid electrolyte precursor.

A solution may also be used which differs from the above solution of sodium-ion conductive solid electrolyte precursor by containing nitrate ions instead of carbonate ions.

In the solution of sodium-ion conductive solid electrolyte precursor, carbonate ions are preferably coordinated bidentately to the transition metal element. In this case, the transition metal element is likely to be stably present in the solution.

The solution preferably contains NR⁴⁺ (where Rs are each independently a substituent of at least one selected from the group consisting of H, CH₃, C₂H₅, and CH₂CH₂OH) as counterions to the sodium ions. By doing so, the transition metal element is likely to be stably present in the solution.

The solution of sodium-ion conductive solid electrolyte precursor can be obtained, for example, by mixing liquid glass (sodium silicate), sodium tripolyphosphate, and a zirconium ammonium carbonate aqueous solution.

Materials that can be used as the binder include those described in the section for the positive electrode layer 3.

### (First Current Collector Layer 5 and Second Current Collector Layer 6)

The respective materials for the first current collector layer 5 and the second current collector layer 6 are not particularly limited, but metallic materials, such as aluminum, titanium, silver, copper, stainless steel or an alloy of any of them, can be used for each of the current collector layers. These metallic materials may be used singly or in combination of two or more of them. The alloy of any of them means an alloy containing at least one of the above metals. The thickness of each of the first current collector layer 5 and the second current collector layer 6 is not particularly limited, but may be within a range of 10 µm to 1000 µm. The first current collector layer 5 and the second current collector layer 6 are preferably slightly larger than the solid electrolyte layer 2, the positive electrode layer 3, and the negative electrode layer 4 to form their respective outer peripheral edges 5a and 6a. In Fig. 1, the width of extension of the first current collector layer 5 and the second current collector layer 6 beyond the solid electrolyte layer 2 is preferably 0.2 mm to 20 mm and more preferably 0.5 mm to 10 mm.

### (Sealing Layer 7)

The sealing layer 7 is a layer provided for the purpose of keeping a vacuum state of the internal space 8 of the all-solid-state secondary battery 1. The softening point of a glass for use in the sealing layer 7 is, from the viewpoint of having thermal stability and chemical stability as glass, enabling the retention of a vacuum state, and providing manageability as a powdered form or a paste form, preferably 500°C or lower, more preferably 470°C or lower, and even more preferably 450°C or lower. For example, a Bi₂O₃-B₂O₃-based glass can be used.

Such a bismuth-based glass preferably contains as a glass composition, in terms of % by mole, 25 to 60% Bi₂O₃, 10 to 35% B₂O₃, and 1 to 40% CuO+MnO, but it is not at all limited to this composition.

Hereinafter, a description will be given of, as an example, a method for forming a sealing layer 7.

### Method for Forming Sealing Layer 7;

First, raw material powders formulated to give a desired glass composition are melted at 700 to 1000°C for one to two hours until a homogeneous glass is obtained. Next, the obtained molten glass is formed into a film or other shapes, the formed body is then ground, and the ground product is classified, thus making a glass powder. The average particle diameter D50 of the glass powder is preferably about 1 to about 20 µm. Furthermore, for the purpose of matching the coefficient of thermal expansion of the glass powder with that of the first and second current collector layers (5, 6) or increasing the mechanical strength of the sealing layer 7, various types of refractory filler powders may be added to the glass powder, followed by mixing to make a sealing material.

The refractory filler powders can be added to the glass powder without blocking the fluidity of the glass powder and therefore can be added up to 40% by volume.

Examples of the refractory filler that can be used include: compounds having a basic structure of [AB₂(MO₄)₃] (where A represents Li, Na, K, Mg, Ca, Sr, Ba, Zn, Cu, Ni, Mn or so on, **B represents** Zr, Ti, Sn, Nb, Al, Sc, Y or so on, and M represents P, Si, W, Mo or so on), including zircon, zirconia, tin oxide, quartz, beta-spodumene, cordierite, willemite, mullite, quartz glass, beta-eucryptite, beta-quartz, zirconium phosphate, zirconium phosphate tungstate, zirconium tungstate, and NbZr (PO₄)₃; and their solid solutions. Particularly, zirconium phosphate, cordierite, willemite, and zirconium phosphate tungstate are preferred. These refractory fillers have properties of a low coefficient of thermal expansion and a high mechanical strength and have good compatibility with Bi₂O₃-B₂O₃-based glass powders.

Next, a vehicle is added to the sealing material and the mixture is kneaded to prepare a sealing material paste. The vehicle consists mainly of an organic solvent and a resin, wherein the resin is added for the purpose of adjusting the viscosity of the paste. If the sealing material has a low softening point and, therefore, has trouble with degreasing process, a high-viscosity organic solvent free from resin may be used. Furthermore, as necessary, a surfactant, a thickener or so on may be added to the vehicle. Moreover, for the purpose of previously removing trace moisture or organic substance adhering to the surfaces of the glass powder and the refractory filler powder, prior to the kneading of the glass powder and the refractory filler powder with the vehicle, the glass powder and the refractory filler powder may be subjected to vacuum treatment at or near the glass transition point of the glass powder for a given length of time.

The organic solvent preferably has a low boiling point (for example, a boiling point of 300°C or lower), preferably yields less residue after being fired, and preferably does not modify the glass. The content of the organic solvent is preferably 10 to 40% by mass. Examples of the organic solvent that can be preferably used include propylene carbonate, toluene, N,N'-dimethylformamide (DMF), 1,3-dimethyl-2-imidazolidinone (DMI), dimethyl carbonate, butyl carbitol acetate (BCA), isoamyl acetate, dimethyl sulfoxide, acetone, and methyl ethyl ketone. Alternatively, higher alcohols are more preferably used as the organic solvent. Higher alcohols themselves have viscosity and, therefore, can make the vehicle into a paste without addition of resin. Alternatively, pentanediol and its derivatives, specifically, diethyl pentanediol (C₉H₂₀O₂) also have excellent viscosity and, therefore, can be used as the solvent.

The resin preferably has a low decomposition temperature, preferably yields less residue after being fired, and preferably does not modify the glass. The content of the resin is preferably 0.1 to 20% by mass. Examples of the resin that can be preferably used include nitrocellulose, polyethylene glycol derivatives, polyethylene carbonate, and acrylic acid ester (acrylic resin) .

Subsequently, the sealing material paste is applied to the to-be-sealed portions of the outer peripheral edges (5a, 6a) of the first current collector layer 5 and the second current collector layer 6 with an applicator, such as a dispenser or a screen printer, dried at a temperature at which the organic solvent can be volatilized, and then subjected to glazing processing at a temperature equal to or higher than the softening point of the glass contained in the sealing material in order to degrease the sealing material, soften and fluidize it, and bond the sealing material to the material for the current collectors. For the purpose of sufficiently degreasing the sealing material, the sealing material may be held for a given length of time at a temperature at which the resin decomposes, before the sealing material is increased to a temperature equal to or higher than the softening point of the glass contained in the sealing material. Thereafter, another to-be-sealed matter is brought into contact with the sealing material on the two to-be-sealed portions, followed by another thermal treatment at a temperature equal to or higher than the softening point of the glass contained in the sealing material. As a result, the glass powder softens and fluidizes and, thus, the to-be-sealed matter and the to-be-sealed portions are sealed together. Alternatively, it is also possible to apply the sealing material paste only to one of the to-be-sealed portions of the peripheral flanges of the first current collector layer 5 and the second current collector layer **6,** bring another to-be-sealed matter into contact with the sealing material paste and the other to-be-sealed portion, and subject the sealing material paste to thermal treatment in vacuum at a temperature equal to or higher than the softening point of the glass contained in the sealing material, thus softening and fluidizing the glass powder to seal the to-be-sealed matter and the to-be-sealed portions together. Furthermore, during the thermal treatment in vacuum, for the purpose of clarifying off dissolved gas in the glass and air bubbles produced due to an air layer remaining at the interface between glass powder particles, a certain amount of inert gas, such as N₂, may be introduced at or near the softening point to return the pressure to the atmospheric pressure.

### [Examples]

Hereinafter, the present invention will be described in more detail with reference to a specific example. The present invention is not at all limited to the following example and can be embodied in appropriately modified forms without changing the gist of the invention.

### (Example 1)

### (a) Production of Solid Electrolyte Layer 2

Raw materials were pre-fired at 1200°C to give a composition of β"-alumina as a solid electrolyte and ground, thus producing a β-alumina powder. The β-alumina powder was ground in a ball mill and then mixed with a binder and a solvent, thus producing a paste. A green sheet was formed from the paste and fired at 1550°C for 30 minutes, thus forming a 36 mm square, 0.1 mm thick solid electrolyte layer 2.

### (b) Production of Positive-Electrode Paste

Raw materials formulated to give, in terms of molar ratio, 40Na₂O-20Fe₂O₃-40P₂O₅ as a glass composition were melt at 1200°C for an hour in the atmosphere and then cooled by twin rollers, thus producing a glass film. The obtained glass film was ground for 60 hours in a ball mill using a mixture of 5-mm diameter ZrO₂ balls, 3-mm diameter ZrO₂ balls, and 1-mm diameter ZrO₂ balls in ethanol, thus obtaining a glass powder having a specific surface area of 11.1 m²/g. The obtained glass powder was further ground for five hours in a planetary ball mill at 300 rpm together with 0.3-mm diameter ZrO₂ balls in ethanol, thus obtaining a glass powder having a specific surface area of 32.1 m²/g.

An amount of 83% by mass of glass powder obtained as above, 13% by mass of β"-alumina (with a specific surface area of 45.2 m²/g) as a solid electrolyte, and 4% by mass of acetylene black (AB) as a conductive agent were mixed, thus producing a positive electrode composite material powder. An amount of 15% by mass of polypropylene carbonate (PPC) as a binder was further added to 100% by mass of positive electrode composite material powder obtained as above and N-methyl-2-pyrrolidone was further added as a solvent to give the positive electrode composite material powder a concentration of 50% by mass. These materials were mixed with a planetary centrifugal mixer, thus producing a positive-electrode paste.

### (c) Production of Negative-Electrode Paste

Liquid glass (sodium silicate: Na₂O·3SiO₂), a zirconium ammonium carbonate aqueous solution ((NH₄)₂Zr(OH)₂(CO₃)₂), and sodium tripolyphosphate (Na₅P₃O₁₀) were weighed 25 g in total to provide NASICON crystals having a composition ratio of Na₃Zr₂Si₂PO₁₂. These materials were added to 150 g of pure water, followed by stirring with a hot stirrer at 50°C for 24 hours. Thus, a solution of sodium-ion conductive solid electrolyte precursor (pH = 9.7) was obtained. Next, this solution was allowed to stand overnight in a thermostat bath at 5°C, thus turning it into a gel. In this manner, a sodium-ion conductive solid electrolyte precursor was prepared.

Sucrose being a carbon electrode material precursor and serving as a source of hard carbon and the sodium-ion conductive solid electrolyte precursor were mixed for an hour in a stirrer to give a weight ratio of 4:1, thus obtaining a mixture. Next, the mixture was dried for 12 hours in a thermostat bath at 60°C and then vacuum dried at 100°C for six hours, thus obtaining a powder mixture of the sodium-ion conductive solid electrolyte precursor and the carbon electrode material precursor. Next, the powder mixture was ground into powdered form in an agate mortar.

The powder mixture of the sodium-ion conductive solid electrolyte precursor and the carbon electrode material precursor and a conductive agent (acetylene black) were weighed to give a weight ratio of 19:1 and mixed, thus obtaining a mixed powder. An amount of 60 parts by mass of the mixed powder was mixed with 40 parts by mass of hard carbon powder (with an average particle diameter D50 of 1 µm), thus obtaining a negative electrode composite material powder. An amount of 15% by mass of polypropylene carbonate (PPC) as a binder was further added to 100% by mass of the negative electrode composite material powder and N-methyl-2-pyrrolidone was further added as a solvent to give the negative electrode composite material powder a concentration of 50% by mass. These materials were mixed with a planetary centrifugal mixer, thus producing a negative-electrode paste.

### (d) Formation of Negative Electrode Layer 4

The negative-electrode paste was applied as a coating to a central portion of one principal surface of the 36 mm square, 0.1 mm thick solid electrolyte layer 2 to have a thickness of 50 µm and a size of 34 mm square. The paste coating was dried for an hour in a thermostat bath at 60°C. Thereafter, the coating was fired under conditions of 800°C for two hours in an N₂ (99.99%) atmosphere, thus forming a negative electrode layer 4. The weight of the negative electrode layer 4 supported was determined from (the weight of a laminate after the formation of the negative electrode) minus (the weight of the solid electrolyte layer). The determined weight of the negative electrode layer supported was multiplied by 0.8, which is a ratio of active material in the negative electrode layer, thus calculating the weight of hard carbon active material. Furthermore, the capacity of the negative electrode layer 4 was calculated by estimating the capacity per g of the hard carbon at 300 mAh/g. As a result, the capacity of the negative electrode layer 4 was 0.49 mAh.

### (e) Formation of Positive Electrode Layer 3

The positive-electrode paste was applied as a coating to a central portion of the principal surface of the solid electrolyte layer 2 on the side opposite to the negative electrode layer 4 to have a thickness of 400 µm and a size of 34 mm square. The paste coating was dried for two hours in a thermostat bath at 60°C and then fired under conditions of holding at 500°C for 30 minutes in an N₂/H₂ (96/4 in % by volume terms) atmosphere, thus forming a positive electrode layer 3. The weight of the positive electrode layer 3 supported was determined from (the weight of a laminate after the formation of the positive electrode) minus (the weight of the laminate before the formation of the positive electrode). The determined weight of the positive electrode layer supported was multiplied by 0.83, which is a ratio of active material in the positive electrode layer, thus calculating the weight of Na₂FeP₂O₇ active material. The capacity of the positive electrode layer 3 was calculated by estimating the capacity per g of the Na₂FeP₂O₇ crystallized glass (the Na₂FeP₂O₇ active material) at a theoretical capacity of 97 mAh/g. As a result, the capacity of the positive electrode layer 3 was 1.4 mAh.

### (f) Production of Sealing Material Paste

First, raw material powders formulated to give a glass composition of, in terms of % by mole, 43% Bi₂O₃, 22% B₂O₃, 23% ZnO, 5% BaO, 6% CuO, and 1% Fe₂O₃ were melted at 1100°C for two hours until a homogeneous glass was obtained. Next, the obtained molten glass was formed into a film or other shapes, the formed body was then ground, and the ground product was classified, thus preparing a Bi₂O₃-B₂O₃-based glass powder having an average particle diameter D50 of 10 µm. The softening point of the prepared glass powder was 410°C and the coefficient of thermal expansion thereof was 110 × 10⁻⁷/°C (at 30 to 300°C) . Furthermore, the volume resistance Logρ (Ω·cm) of the prepared glass powder was 10, which exhibited good insulation characteristics. A resin consisting of acrylic resin and an organic solvent consisting of α-terpineol were added to and kneaded with the prepared glass powder to adjust them to a viscosity suitable for screen printing or application with a dispenser, thus preparing a sealing material paste.

The coefficient of thermal expansion is a value measured within a temperature range of 30 to 300°C with a TMA device. The measurement sample for the coefficient of thermal expansion used was that densely sintered at a temperature of its softening point plus 20°C. The softening point is a value determined by macro-DTA. In the DTA, the measurement atmosphere was the air, the rate of temperature increase was 10°C/min, and the measurement was started from room temperature.

### (g) Formation of Sealing Layer 7

Subsequently, the sealing material paste was applied to each of the to-be-sealed portions of the respective outer peripheral edges 5a, 6a of the first current collector layer 5 and the second current collector layer 6, each formed of SUS430 (with a coefficient of thermal expansion of 107 × 10⁻⁷°C (at 30 to 300°C)) having a size of 50 mm square and a thickness of 100 µm, with an applicator, such as a dispenser or a screen printer, to give a size of 44 mm square, a width of 2 mm, and a height of 1 mm, dried at 120°C for 15 minutes, and then subjected to glazing processing by holding the sealing material for 10 minutes at 430°C in the air atmosphere. Thereafter, the solid electrolyte layer 2 on which the positive electrode layer 3 and the negative electrode layer 4 were formed was placed on a portion of the first current collector layer 5 enclosed by the sealing material, the second current collector layer 6 was placed to allow the respective sealing materials on the first and second current collector layers 5, 6 to contact each other, and these members were subjected to thermal treatment for 20 minutes at 450°C in a vacuum at 2 to 3 Pa to form a sealing layer 7 and thus produce an all-solid-state secondary battery 1.

### (h) Charge/Discharge Test

Based on the capacity of the positive electrode, a constant-current charge test in a thermostat bath at 60°C was conducted at a current value set to give a C-rate of 0.02 (charge and discharge for 50 hours) and respective constant-current discharge tests in a thermostat bath at 60°C and 150°C were conducted at a current value set to give a C-rate of 0.02 (charge and discharge for 50 hours).

### [Evaluation Results]

Fig. 4 is a graph showing results of charge/discharge tests in Example 1.

As shown in Fig. 4, also when the battery was discharged at 150°C, a stable output characteristic was obtained as with the case of discharge at 60°C. Furthermore, when respective charge/discharge tests at 200°C, 250°C, and 300°C were conducted in the same manner as with the test at 150°C, it was confirmed that in each case the battery exhibited an equivalent output characteristic to that in the test at 150°C.

### [Reference Signs List]

- 1: all-solid-state secondary battery
- 2: solid electrolyte layer
- 3: positive electrode layer
- 4: negative electrode layer
- 5, 6: first and second current collector layers
- 7: sealing layer
- 8: internal space

## Claims

1. An all-solid-state secondary battery with a solid electrolyte layer, a positive electrode layer, and a negative electrode layer, the all-solid-state secondary battery comprising:
a first current collector layer provided on a principal surface of the positive electrode layer located on a side thereof opposite to a side thereof where the solid electrolyte layer is disposed;
a second current collector layer provided on a principal surface of the negative electrode layer located on a side thereof opposite to a side thereof where the solid electrolyte layer is disposed; and
a sealing layer provided between an outer peripheral edge of the first current collector layer and an outer peripheral edge of the second current collector layer to seal the positive electrode layer and the negative electrode layer,
wherein an internal space enclosed by the first current collector layer, the second current collector layer, and the sealing layer is vacuum.

2. The all-solid-state secondary battery according to claim 1, wherein the sealing layer contains a low-melting-point glass having a softening point of 500°C or lower.

3. The all-solid-state secondary battery according to claim 2, wherein the sealing layer contains a Bi₂O₃-B₂O₃-based glass.

4. The all-solid-state secondary battery according to any one of claims 1 to 3, wherein the positive electrode layer contains a positive-electrode active material made of a crystallized glass containing crystals represented by a general formula NaₓMP₂O₇ (where 1 ≤ x ≤ 2 and M is at least one selected from the group consisting of Fe, Ni, Co, Mn, and Cr).

5. The all-solid-state secondary battery according to any one of claims 1 to 3, wherein the negative electrode layer contains a negative-electrode active material made of hard carbon.

6. The all-solid-state secondary battery according to any one of claims 1 to 3, wherein the solid electrolyte layer contains a solid electrolyte being at least one selected from the group consisting of β-alumina, β"-alumina, and NASICON crystals.
